# EUROPEAN PATENT APPLICATION

(11) **EP 2 581 803 A2**
(43) Date of publication of application: **17.04.2013**
(21) Application number: 12188396.1
(22) Date of filing: 12.10.2012
(51) Int. Cl.: G06F 1/16, G06F 3/01

(54) **Methods and devices for managing views displayed on an electronic device**

(30) Priority: 12.10.2011 US 201161546525 P
(71) Applicant: Research In Motion Limited, Waterloo, ON N2L 3W8 (CA)
(72) Inventor: McCallum, Graeme David, Kanata, Ontario K2K 3K1 (CA)
(74) Representative: Moore, Barry

(57) **Abstract**

A mobile device is disclosed. The mobile device may include a display device configured to generate a first graphical configuration at a first orientation of the mobile device and a second graphical configuration at a second orientation of the mobile device, at least one input device, and an input linking module configured to selectively link the at least one input device to either the first or second graphical configuration based on an orientation of the mobile device.

## Description

### FIELD OF TECHNOLOGY

The present disclosure relates to an electronic device, and more specifically, an electronic device including an input linking module configured to selectively link at least one input device to a particular view in response to a change in orientation of the electronic device.

### BACKGROUND

Electronic devices, including portable electronic devices, have gained widespread use and may provide a variety of functions including, for example, telephonic, electronic messaging, and other personal information manager application functions. Portable electronic devices include, for example, mobile stations, cellular telephones, smart telephones, wireless personal digital assistants, and laptop computers with wireless capabilities.

Such devices include displays and operating systems providing graphical user interfaces (GUIs) that impart, among other things, views or graphical configurations including graphical data about applications and services provided by the device to the user. The displayed graphical data may be modified depending on the functions and operations being performed. In certain instances, a user may highlight, add, or remove graphical data displayed on the GUIs by, for example, inputting commands and functions via a keypad or other input devices.

For certain applications, it may be cumbersome and/or undesirable for a user to switch between multiple graphical configurations to access and manipulate the graphical data displayed on the GUI. Accordingly, a need exists to simplify the manner in which graphical data displayed on the GUI may be accessed and manipulated.

### BRIEF DESCRIPTION OF THE DRAWINGS

It is to be understood that the following detailed description is exemplary and explanatory only and is not restrictive of the disclosure, as claimed. The accompanying drawings, which are incorporated in and constitute a part of this specification, illustrate several embodiments of the disclosure and together with the description, serve to explain the principles of the disclosure. In the drawings:

Fig. 1 is a block diagram of a portable electronic device, consistent with disclosed embodiments;

Fig. 2 is a top plan view of a portable electronic device, consistent with disclosed embodiments;

Fig. 3 is a flow diagram of an example process for manipulating multiple graphical configurations displayed on a display device of a portable electronic device, consistent with disclosed embodiments;

Figs. 4 to 6 illustrate an example manipulation of multiple graphical configurations displayed on a display device of a portable electronic device, consistent with disclosed embodiments;

Figs. 7 to 9 illustrate another example manipulation of multiple graphical configurations displayed on a display device of a portable electronic device, consistent with disclosed embodiments; and

Figs. 10 to 12 illustrate another example manipulation of multiple graphical configurations displayed on a display device of a portable electronic device, consistent with disclosed embodiments.

### DETAILED DESCRIPTION

Reference will now be made in detail to the example embodiments of the disclosure that are illustrated in the accompanying drawings. For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to a portable electronic device. Examples of portable electronic devices include mobile, or handheld, wireless communication devices such as pagers, cellular phones, cellular smart-phones, wireless organizers, personal digital assistants, and wirelessly enabled notebook computers. The portable electronic device may also be a portable electronic device without wireless communication capabilities, such as a handheld electronic game device, digital photograph album, digital camera, or other portable device.

The disclosure further relates to managing and manipulating multiple views of a portable electronic device in response to a change in orientation of the electronic device. An application of the electronic device displays multiple views, which may provide various graphical data related to the application. By switching the orientation of the electronic device, a different view is presented to the user. Additional or different device functions are connected to each view based on the change in orientation. Such a configuration allows a user to access and manipulate multiple views of the application by merely shifting the orientation of the electronic device.

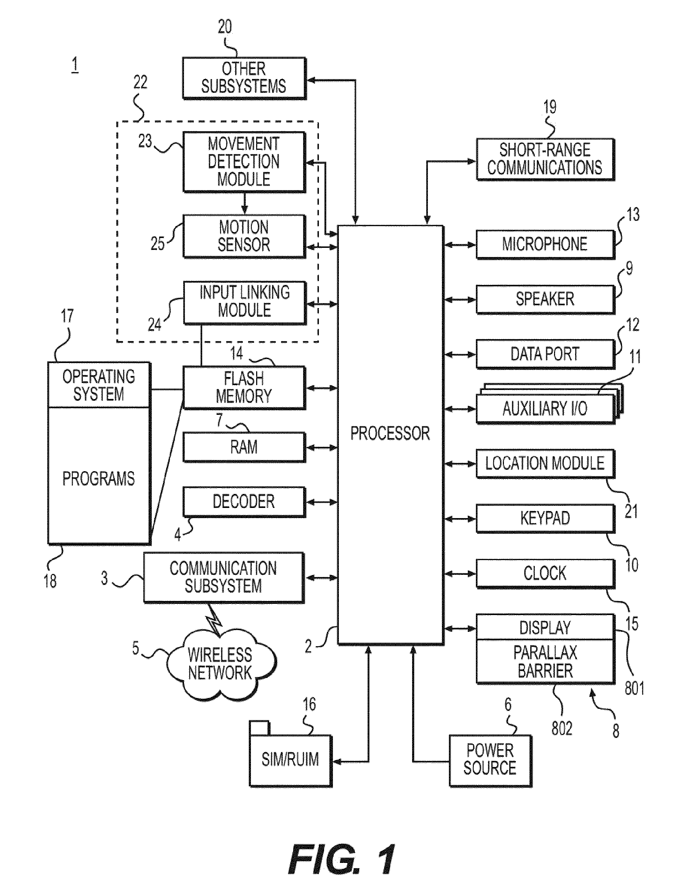

Fig. 1 illustrates a block diagram of an example of a portable electronic device 1. Portable electronic device 1 includes multiple components, such as a processor 2 configured to control the overall operation of the portable electronic device 1. In one embodiment, processor 2 comprises a microprocessor. Communication functions, including data and voice communications, are performed through communication subsystem 3. In one embodiment, device 1 is configured to receive compressed data and to decompress and decrypt the data by using a decoder 4. Communication subsystem 3 receives messages from and sends messages to a wireless network 5. Wireless network 5 may be any type of wireless network, including, but not limited to, data wireless networks, voice wireless networks, and networks that support both voice and data communications. Power source 6, such as one or more rechargeable batteries or a port to an external power supply, powers portable electronic device 1.

In addition, processor 2 interacts with other system components of portable electronic device 1, such as a random access memory (RAM) 7, a display device 8, a speaker 9, a keypad 10, auxiliary I/O devices 11, a data port 12, a microphone 13, a flash memory 14, and a clock 15.

To identify a subscriber for network access, portable electronic device 1 uses a Subscriber Identity Module or a Removable User Identity Module (SIM/RUIM) card 16 for communication with a network, such as wireless network 5. Alternatively, user identification information may be programmed into flash memory 14.

Portable electronic device 1 includes an operating system 17 and software programs or applications 18 that are executed by processor 2 and may be stored in a persistent, updatable store such as flash memory 14. Additional applications or programs may be loaded onto portable electronic device 1 through wireless network 5, auxiliary I/O subsystem 11, data port 12, short-range communications subsystem 19, or any other suitable subsystem 20.

A received signal that may reflect, for example, a text message, an e-mail message, or web page download, is processed by communication subsystem 3 and input to processor 2. Processor 2 processes the received signal for output, such as to display device 8 and/or to auxiliary I/O subsystem 11. A user may generate data items, for example e-mail or text messages, which may be transmitted over wireless network 5 through communication subsystem 3. For voice communications, the overall operation of the portable electronic device 1 may be similar. Speaker 9 outputs audible information converted from electrical signals, and microphone 13 converts audible information into electrical signals for processing.

Electronic device 1 also includes a location module 21. Location module 21 may include, for example, a GPS module, and may be configured to receive and interpret GPS signals from a system of satellites to triangulate the current location of device 1.

Display device 8 is configured to display multiple views or graphical configurations on a single display 801. Particularly, display device 8 includes a parallax barrier 802, which allows a user to selectively view different views by changing the orientation of electronic device 1. Pixels associated with multiple views or graphical configurations are arranged in an alternating fashion along display 801. For example, pixels defining a first view or graphical configuration, pixels defining a second view or graphical configuration, and pixels defining a third view or graphical configuration are arranged left to right in distinct pixel columns along display 801. Parallax barrier 802 includes light-blocking strips arranged such that the strips partially block light coming from each pixel column on display 801, and a portion of the light cannot be observed from directions other than a display direction or orientation of the pixel columns.

Accordingly, for example, a first graphical configuration can be viewed when an orientation of electronic device 1 is in a central position relative to the user (i.e., the plane of electronic device 1 is flat relative to the user), but cannot be viewed if the orientation of electronic device 1 is shifted either to the left or to the right relative to the user. A second graphical configuration can be viewed when the orientation of electronic device 1 is shifted to the left relative to the user, but cannot be viewed when the orientation of electronic device 1 is in the central position relative to the user or when the orientation of electronic device 1 is shifted to the right relative to the user. A third graphical configuration can be viewed when the orientation of electronic device 1 is shifted to the right relative to the user, but cannot be viewed when electronic device 1 is shifted to the central position or to the left relative to the user.

Electronic device 1 also includes a graphics system 22 configured to manage graphical data displayed on display device 8. In one embodiment, graphics system 22 includes a movement detection module 23 and an input linking module 24.

Movement detection module 23 is configured to detect movement of electronic device 1 and identify the orientation of electronic device 1. Movement detection module 23 is also configured to input movement and orientation data to processor 2. In one embodiment, movement detection module 23 includes a motion sensor 25 configured to generate a signal responsive to a change in orientation of electronic device 1. In this embodiment, motion sensor 25 includes a low-g micro-electromechanical system (MEMs) accelerometer. The accelerometer may be any type, including a capacitive, piezoelectric, piezoresistive, or a gas-based accelerometer. The accelerometer senses and converts an acceleration detected from a motion or a movement of electronic device 1 (e.g., tilt, rotation, inertial, or vibration) or gravity into an electrical signal and may be available in one, two, or three axis configurations. The accelerometer produces digital or analog output signals.

Input linking module 24 is configured to receive movement and orientation data determined by movement detection module 23. Input linking module 24 is further configured to link device functionality to a particular graphical configuration displayed on display device 8 based on the movement and orientation data. For instance, input linking module 24 is configured to link new and different functions inputted via keypad 10 to the second graphical configuration when electronic device 1 is rotated towards the left relative to the user. By linking device functionality, the user may interface with and manipulate the second graphical configuration through keypad 10. The particular graphical configuration includes an arrangement of data, such as text, icons, graphics, dialog boxes, and any other visual information for the user. The linked functionality may include, for example, accessing and controlling the data via keypad 10. Data, and information relating to, for example, the current view, placement, location, and orientation of the data, is stored in flash memory 14, and input functions access and modify the data via input linking module 24.

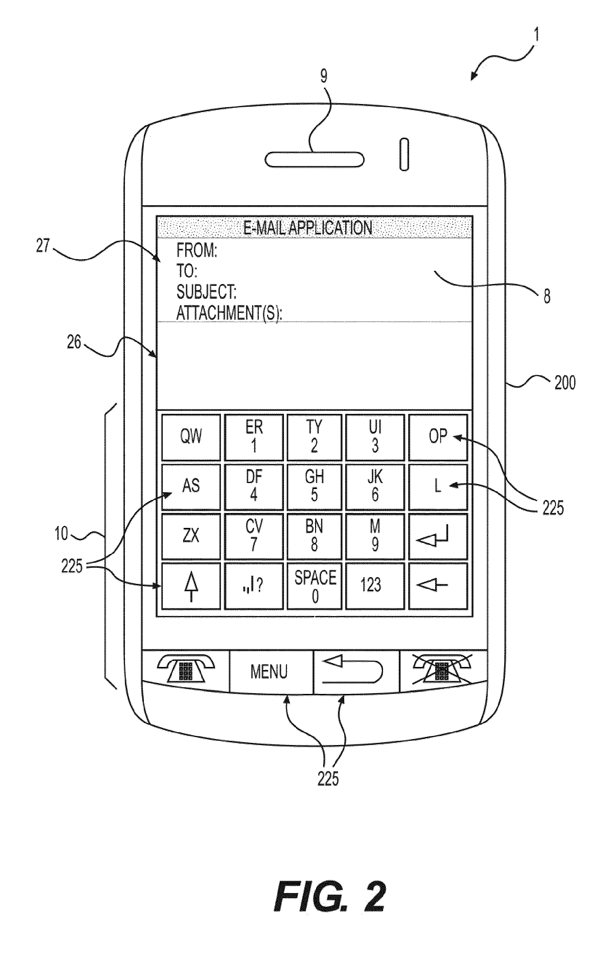

A top plan view of portable electronic device 1 is shown generally in Fig. 2. Example portable electronic device 1 includes a housing 200 in which may be disposed various components such as those shown in Fig. 1. For example, various input apparatuses and output apparatuses, processor 2, and flash memory 14 for storing at least programs and/or applications 18 are disposed in housing 200. Processor 2 is responsive to input functions from input apparatuses, such as keypad 10, and provides output functions to output apparatus, such as display device 8 or speaker 9. Processor 2 also interfaces with input linking module 24 and flash memory 14 and is capable of executing programs 18.

A graphical configuration 26 is generated on display device 8 and comprises data related to one or more programs and/or applications 18 stored in flash memory 14. Several different graphical configurations are generated on display device 8, with graphical configuration 26 representing a particular graphical configuration. In other words, programs and/or applications 18 generate multiple graphical configurations on display 801, with parallax barrier 802 blocking the view of all but one graphical configuration based on the orientation of electronic device 1. In the example of Fig. 2, graphical configuration 26 represents a particular configuration related to an e-mail application 27. E-mail application 27 provides a graphical interface to allow a user to receive, generate, and send e-mail messages to and from addressees via electronic device 1. E-mail application 27 also provides a historical list of e-mails received, drafted, saved, and sent. Data pertaining to e-mail application 27 includes, for example, mail icons and text identifying addressees and message contents. Accordingly, the GUI is comprised of the graphical configuration and user-operated functions related to a program or an application presented on display device 8.

As discussed above, graphical configuration 26 is displayed to the user based on the orientation of electronic device 1, with other graphical configurations related to e-mail application 27 being blocked from view by parallax barrier 802. For example, a graphical configuration related to an e-mail attachment (e.g., a graph, word processor document, etc.) or a reply e-mail is also generated on display 801 but is masked by parallax barrier 802 because electronic device 1 is not in an appropriate display orientation. That is, electronic device 1 is in the central position in Fig. 2 and shows the e-mail message (i.e., the first graphical configuration), but when the orientation of electronic device is shifted to the left or to the right relative to the user, the graphical data associated with the e-mail attachment (i.e., the second graphical configuration) or the reply e-mail (i.e., the third graphical configuration) will be viewable by the user.

As can be understood from Fig. 2, the output apparatuses include display device 8 and speaker 9, each of which is responsive to one or more output signals or functions from processor 2. The input apparatuses include, for example, keypad 10. Keypad 10 includes input members 225, such as mechanical keys using, for example, a mechanical dome switch actuator. Alternatively, input members 225 on keypad 10 may be part of display 8, with display having a touch-sensitive configuration as known in the art. As such, it should be understood that in certain embodiments, keypad 10 may be part of graphical configuration 26. In certain embodiments, input members 225 form a QWERTY keyboard, either in reduced or full format. In a reduced keyboard, a number of input members 225 are assigned to two or more characters. In other embodiments, input members 225 are assigned characters alphabetically.

Although not shown in Fig. 2, it should be appreciated that some embodiments of handheld electronic device 1 include other input apparatuses, such as a scroll wheel, an optical trackpad, or a ball located either on the face or side of device 1. These input apparatuses provide additional inputs to processor 2. For example, a scroll wheel provides one input to processor 2 when rotated and a second input to processor 2 when actuated. An optical trackpad provides one input to processor 2 when swiped and a second input to processor 2 when pressed or tapped.

It should also be appreciated that input linking module 24 is configured to selectively link device components, for example, at least one input device, to a particular graphical configuration based on an orientation of electronic device 1. For instance, input linking module 24 is configured to link keypad 10, microphone 13, a scroll wheel, a trackball, a trackpad, or any other component (or a combination of components) to any of the graphical configurations based on the orientation or position of electronic device 1.

In one embodiment, for example, starting with the front of device 1 facing a user, input linking module 24 is configured to link the at least one input device to the second graphical configuration when the device 1 is in a second orientation relative to the user (for example, rotated to the left relative to the user). In another embodiment, for example, input linking module 24 is configured to link the at least one input device to the third graphical configuration when the device 1 is in a third orientation relative to the user (for example, rotated to the right relative to the user).

Furthermore, it should be appreciated that input linking module 24 is configured to link different input devices to each graphical configuration. For instance, input linking module 24 may link keypad 10 to the second graphical configuration when electronic device 1 is rotated to the leftward position, and may link the scroll wheel to the third graphical configuration when electronic device 1 is rotated to the rightward position.

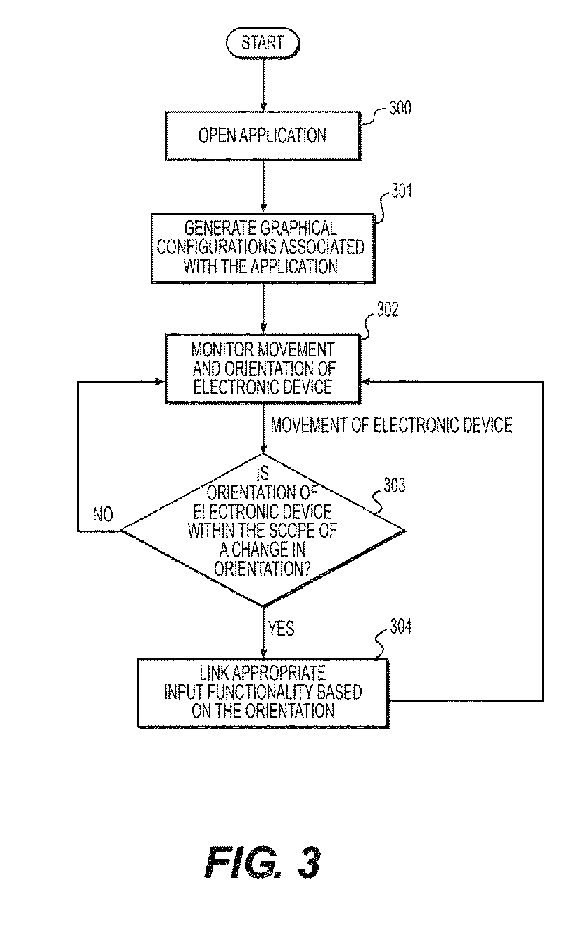

Fig. 3 is a flow diagram of an example process for manipulating multiple graphical configurations displayed on display device 8 of electronic device 1. In one embodiment, the process is carried out by software stored as part of programs 18, and executed by processor 2.

At step 300, a user opens an application or program, such as e-mail application 27 discussed above, and processor 2 then generates a set of graphical configurations related to the user selected application (e.g., e-mail application 27) on display device 8 (step 301). The graphical configurations include graphical arrangements of images, graphics, and/or text associated with the user selected application, with each graphical configurations being different or distinct from the other. That is, each graphical configuration includes a distinct graphical arrangement to provide a different experience of the user selected application. For example, processor 2 generates a first graphical configuration for an e-mail message, a second graphical configuration for an e-mail attachment, and a third graphical configuration for a reply e-mail message on display 801, with parallax barrier 802 exposing for view each of the graphical configurations based on the appropriate display orientation of electronic device 1.

At step 302, graphics system 22 monitors movements and orientations of electronic device 1. That is, movement detection module 23 detects movements (e.g., shifts, tilts, rotations, vibrations, and the like) of electronic device 1 and delivers movement and orientation data corresponding to a detected movement and orientation to processor 2. Processor 2 stores the movement and orientation data in memory, e.g., flash memory 14, and input linking module 24 receives the movement and orientation data from flash memory 14. If a movement has been detected, the movement and orientation data is obtained by input linking module 24 and analyzed to determined whether the detected orientation is within the scope of a change in orientation, step 303.

The change in orientation is a threshold orientation, which initiates input linking module 24 to link input apparatuses to a particular graphical configuration being viewed by the user. Each graphical configuration generated on display device 8 includes an associated, orientation having particular characteristics, such as direction, angular rotations, and other movement characteristics, stored in flash memory 14. Each change in orientation initiates input linking module 24. If input linking module 24 obtains movement and orientation data at least substantially similar to the stored change in orientation and movement characteristics, input linking module 24 proceeds to link input functionality to the particular graphical configuration. For example, if electronic device 1 is rotated to the left, the second graphical configuration is exposed to the user, and if electronic device 1 is rotated to the right, the third graphical configuration is exposed to the user. Accordingly, rotation of electronic device 1 to the left or to the right relative to the user constitutes a change in orientation appropriate for initializing input linking module 24 to selectively link input apparatuses to the respective graphical configurations. Alternatively, or additionally, the change in orientation is defined based on a particular amount of degrees electronic device 1 has been rotated. For example, if electronic device is rotated 45º to the left or to the right from a flat orientation (i.e., 0º), the change in orientation initializes input linking module 24.

If the orientation of electronic device 1 is not within the scope of the change of orientation, graphics system 22 continues to monitor movements and orientations of electronic device 1, step 302. In one exemplary embodiment, if electronic device 1 is flat relative to the user and remains at rest (or is not moved), the first graphical configuration may be viewed by the user. The flat orientation of electronic device 1 is a default orientation, in which particular input functions are automatically linked to the first graphical configuration. If the orientation of electronic device is within the scope of the change of orientation, however, input linking module 24 then selectively links appropriate input functions to either the second or third graphical configurations presented on display device 8 (step 304).

At step 304, input linking module 24 selectively links input functionality to the particular graphical configuration being viewed by the user on display device 8. For instance, in response to the rotation of electronic device 1 to the left or to the right, input linking module 24 links, for example, additional or different input functionality to either the second or third graphical configuration, respectively. The linked input functionality may provide, for example, additional or new manipulations and management of the second and third graphical configurations and may be performed via keypad 10. For instance, the user may use keypad 10 to zoom in or out of the particular graphical arrangement, enter new data, such as text, into the graphical arrangement, and execute applications presented in the graphical arrangement. It should also be appreciated that in some embodiments, other input apparatuses, in addition to keypad 10, may perform the linked input functionality, such as, for example, microphone 13, a scroll wheel, or an optical trackpad.

Graphics system 22 continues to monitor movements and orientations of electronic device 1 (step 302), and selectively links input functionality to graphical configurations when appropriate.

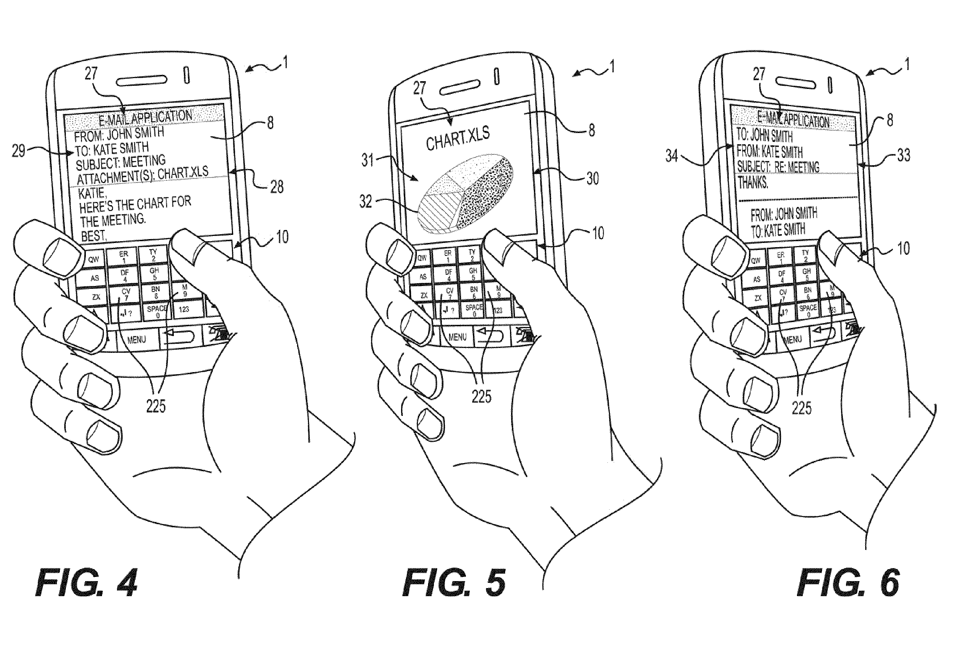

Figs. 4-6 illustrate an example of a process for adjusting between and manipulating multiple graphical configurations displayed to the user on display device 8 of electronic device 1 related to e-mail application 27. E-mail application 27 presents graphical configurations related to received, generated, and sent e-mail messages. For instance, e-mail application 27 provides text indicating the e-mail recipient and sender, the subject of the e-mail, e-mail attachments, and the e-mail message. Fig. 4 depicts electronic device 1 under a default orientation. That is, electronic device 1 remains motionless and the plane of display device 8 is positioned flat relative to the user. Accordingly, the graphical configuration displayed to the user on display device 8, as shown in Fig. 4, represents a first graphical configuration 28 of e-mail application 27. In the embodiment of Fig. 4, first graphical configuration 28 is a received e-mail message 29. Because electronic device 1 is in the default orientation, certain input functions are automatically linked to first graphical configuration 28. For example, the user may actuate keypad 10 to access, manipulate, and manage received e-mail message 29. The user may scroll up and down e-mail message 29; zoom in and out of message 29; and highlight, cut, and paste text.

Fig. 5 illustrates the electronic device 1 of Fig. 4 rotated to a leftward position relative to the user. As electronic device 1 is rotated to the leftward position, a second graphical configuration 30 of e-mail application 27 is displayed to the user on display device 8. As discussed above, second graphical configuration 30 has been generated on display 801 as e-mail application 27 is opened by processor 2, but blocked from view by parallax barrier 802 in all orientations other than from the leftward position. Second graphical configuration 30 provides additional data pertaining to e-mail application 27, which is different from the data of first graphical configuration 28. In the embodiment of Fig. 5, second graphical configuration 30 is, for example, an attachment 31 attached with received e-mail message 29. In the exemplary embodiment of Fig. 5, attachment 31 is a chart 32 labeled "Chart.xls."

As electronic device 1 is rotated to the leftward position, movement detection module 23 detects the movement and orientation of electronic device 1, and input linking module 24 determines that the orientation is within the scope of a change in orientation. In this case, input linking module 24 determines that the orientation of electronic device has shifted towards the leftward position. Input linking module 24 also identifies that the leftward orientation of electronic device 1 is the display orientation which allows the user to view second graphical configuration 30 and accordingly links additional or different input functionality to second graphical configuration 30. That is, functions pertaining to second graphical configuration 30 are linked to second graphical configuration 30 by input linking module 24 in response to the electronic device 1 changing to the leftward orientation. For instance, the user accesses, manipulates, and/or edits attachment 31 via, e.g., keypad 10. The user may actuate keypad 10 to zoom in and out of chart 32, type text within chart 32, input new data to alter chart 32, save chart 32 to flash memory 14 or RAM 7, and perform various other functions associated with attachment 31. Accordingly, the linked input functionality associated with second graphical configuration 30 is additional and different from the linked input functionality associated with first graphical configuration 28.

Fig. 6 illustrates the electronic device 1 rotated to a rightward position relative to the user. A third graphical configuration 33 of e-mail application 27 is displayed to the user on display device 8 when electronic device 1 is rotated to the rightward position. Third graphical configuration 33 has also been generated on display 801 as e-mail application 27 is opened by processor 2, but blocked from view by parallax barrier 802 in all orientations other than from the rightward position. Third graphical configuration 33 provides additional data pertaining to e-mail application 27, which is different from the data of first and second graphical configurations 28, 30. In the embodiment of Fig. 6, third graphical configuration 33 is, for example, a reply e-mail message 34 in response to received e-mail message 29.

As electronic device 1 is rotated to the rightward position, movement detection module 23 detects the movement and orientation of electronic device 1, and input linking module 24 determines that the orientation is within the scope of a change in orientation. In this case, input linking module 24 determines that the orientation of electronic device is towards the rightward position. Input linking module 24 also identifies that the rightward orientation of electronic device 1 is the display orientation which allows the user to view third graphical configuration 33 and accordingly links additional or different input functionality to third graphical configuration 33. In other words, functions pertaining to third graphical configuration 33 are linked to third graphical configuration 33 by input linking module 24 in response to the electronic device 1 changing to the rightward orientation. For instance, the user accesses, manipulates, and/or edits reply e-mail message 34 via, e.g., keypad 10. The user may actuate keypad 10 to scroll up and down reply e-mail message 34, type text into reply e-mail message 34, access, add stored addressees to reply e-mail message 34, save reply e-mail message 34 to flash memory 14 or RAM 7, and perform various other operations associated with reply e-mail message 34. Accordingly, the linked input functionality associated with third graphical configuration 33 is additional and different from the linked input functionality associated with first graphical configuration 28 and second graphical configuration 30.

In some embodiments, input linking module 24 automatically links additional or different input functionality to an appropriate graphical configuration in response to a change in orientation of electronic device 1. Each of the first, second, and third graphical configurations 28, 30, 33 is separately accessed and manipulated by merely shifting the orientation of electronic device 1. Moreover, input functionalities are separately associated with each graphical configuration, such that different and/or additional functions can be performed on a single graphical configuration without affecting the other graphical configurations. Accordingly, the present disclosure maximizes the usable display area of display device 8 and provides eased manipulation and functionality of programs and application of electronic device 1.

In other embodiments, input linking module 24 is "locked" from linking input functionality to the specific graphical configuration; user input may unlock this functionality and permit module 24 to automatically link input functionality to an appropriate graphical configuration. For instance, in the embodiments of Figs. 5 and 6, input linking module 24 can link specific input functionalities to second and third graphical configurations 30, 33 once the user presses the "MENU" input member. Accordingly, input functionality may be selectively linked to a particular graphical configuration by the user. In such embodiments, input linking module 24 does not link input functionality to a graphical configuration in response to a change in orientation of electronic device 1, but rather in response to a manual actuation by the user.

In some embodiments, input functionality is manually linked to a desired graphical configuration, such as, for example, second graphical configuration 30 or third graphical configuration 33, by actuating a specified input member on keypad 10. In other words, once the user selects which desired graphical configuration to manipulate (e.g., second graphical configuration 30 or third graphical configuration 33), the user may actuate the specified input member, which in turn may cause input linking module 24 to link input functionality of, for example, keypad 10, to the desired graphical configuration. It should be appreciated that, in addition to input members on keypad 10, any number of other suitable input members may be configured to cause input linking module 24 to link input functionality to the desired graphical configuration. For example, a virtual button on a touch-sensitive display 8 may be actuated to link input functionality to the desired graphical configuration.

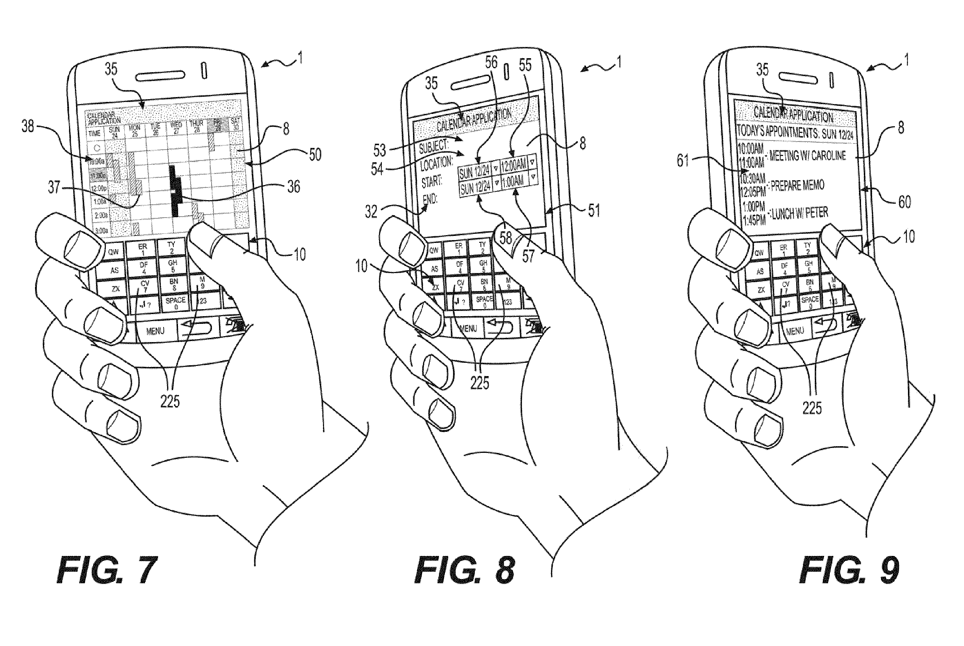

Figs. 7-9 illustrate another example of a process for adjusting between and manipulating multiple graphical configurations displayed to the user on display device 8 related to a calendar application 35. Calendar application 35 graphically tracks appointments and other status matters relating to a user and electronic device 1. Calendar application 35 provides a daily, weekly, and/or monthly electronic schedule of appointments, meetings, and events, as entered by the user.

Fig. 7 depicts electronic device 1 under a default orientation. That is, electronic device 1 remains motionless and the plane of display 8 is positioned flat relative to the user. Accordingly, the graphical configuration displayed to the user on display device 8, represents a first graphical configuration 50 of calendar application 35. In the exemplary embodiment of Fig. 7, first graphical configuration 50 of calendar application 35 is a schedule 38 providing data relating to particular events, for example, social events 36 (solid bars) and work-related events 37 (cross-hatched bars). In the default orientation, certain input functions are automatically linked to first graphical configuration 50. For instance, the user accesses, manipulates, and manages schedule 38 via, e.g., keypad 10. The user may scroll up and down schedule 38, zoom in and out of schedule 38, view specific events, and perform any other function of schedule 38.

Fig. 8 illustrates the electronic device 1 of Fig. 7 rotated to a leftward position relative to the user. As electronic device 1 is rotated to the leftward position, a second graphical configuration 51 of calendar application 35 is displayed to the user on display device 8. Second graphical configuration 51 has been generated on display 801 as calendar application 35 is opened by processor 2, but blocked from view by parallax barrier 802 in all orientations other than from the leftward position. Second graphical configuration 51 provides additional data pertaining to calendar application 35, which is different from the data of first graphical configuration 50. In the embodiment of Fig. 8, second graphical configuration 51 is, for example, a new calendar entry interface 52. Entry interface 52 includes, for example, a subject entry 53 for text input, a location entry 54 for text input, a start time selection box 55, a start date selection box 56, an end time selection box 57, and an end date selection box 58.

Movement detection module 23 detects the movement and orientation of electronic device 1, and input linking module 24 determines that the orientation is within the scope of a change in orientation. In this case, input linking module 24 determines that the orientation of electronic device 1 has shifted towards the leftward position. Input linking module 24 also identifies that the leftward orientation of electronic device 1 is the display orientation which allows the user to view second graphical configuration 51 and accordingly links additional or different input functionality to second graphical configuration 51. That is, functions pertaining to second graphical configuration 51 are linked to second graphical configuration 51 by input linking module 24 in response to electronic device 1 changing to the leftward orientation. For instance, the user accesses, manipulates, and/or edits entry interface 32 via, e.g., keypad 10. In particular, the user may actuate keypad 10 to enter a new calendar entry via entry interface 32. The user may input text to describe the calendar entry and also select the date and time of the calendar entry by actuating appropriate members 225 on keypad 10.

As illustrated in Fig. 9, a third graphical configuration 60 of calendar application 35 is displayed to the user on display device 8 when electronic device 1 is rotated to a rightward position. Third graphical configuration 60 has also been generated on display 801 as calendar application 35 is opened by processor 2, but blocked from view by parallax barrier 802 in all orientations other than from the rightward position. Third graphical configuration 60 provides additional data pertaining to calendar application 35, which is different from the data of first and second graphical configurations 50, 51. In the embodiment of Fig. 9, third graphical configuration 60 is, for example, a day schedule 61, organizing the current day's events. Day schedule 61 includes text providing a description of scheduled events and the scheduled times of the events.

Input linking module 24 determines that the rightward movement and orientation of electronic device 1 is within the scope of a change in orientation. Input linking module 24 also identifies that the rightward orientation of electronic device 1 is the display orientation which allows the user to view third graphical configuration 60 and accordingly links additional or different input functionality to third graphical configuration 60. That is, functions pertaining to third graphical configuration 60 are linked to third graphical configuration 60 by input linking module 24 in response to the electronic device 1 changing to the rightward orientation. For instance, keypad 10 and/or a scroll wheel, or the like, is linked to day schedule 61 and is utilized by the user to access and manipulate day schedule 61. In particular, the user accesses, manipulates, and/or edits day schedule 6 via, e.g., key pad 10. For example, the user may actuate keypad 10 and/or the scroll wheel to scroll up and down day schedule 61, zoom in and out of day schedule 61, copy and paste text, and perform various other operations associated with day schedule 61.

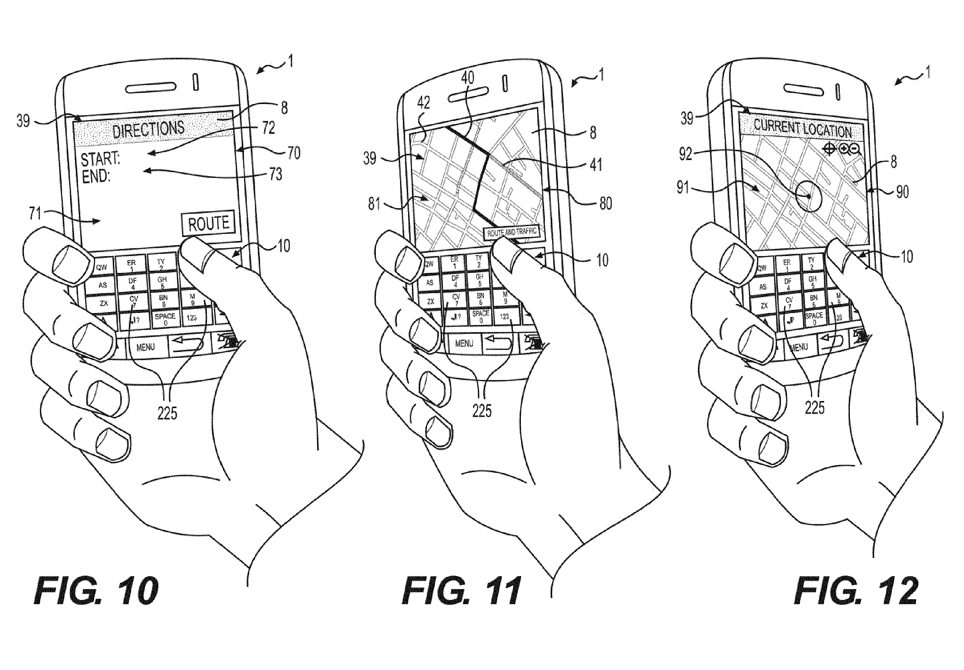

Figs. 10-12 illustrate yet another example of a process for adjusting between and manipulating multiple graphical configurations displayed to the user on display device 8 related to a map application 39. Fig. 10 depicts electronic device 1 under a default orientation. Accordingly, the graphical configuration displayed to the user on display device 8 represents a first graphical configuration 70 of map application 39. In the embodiment of Fig. 10, first graphical configuration 70 is a navigation interface 71. Navigation interface 71 includes, for example, a start location entry 72 for text input and an end location entry 73 for text input. Because electronic device 1 is in the default orientation, certain input functions are automatically linked to first graphical configuration 70. For example, the user manipulates and controls navigation interface 71 via, e.g., keypad 10. More particularly, the user enters the start location into start location entry 72 and a desired end location into end location entry 73 to obtain directions from the start location to the desired end location from map application 39.

The user may initialize map application 39 to provide navigational directions by selecting the "ROUTE" button on interface 71 via keypad 10. Processor 2 generates a second graphical configuration 80 of map application 39 on display 801 in response to the "ROUTE" button being selected, which is blocked from view by parallax barrier 802 and only viewable when electronic device 1 has changed its orientation. Fig. 11 illustrates second graphical configuration 80 displayed to the user on display device 8 once electronic device is rotated to a leftward position (i.e., the change in orientation). Second graphical configuration 80 provides a navigation map 81 including a highlighted navigation route 40 (solid lines) and highlighted traffic data 41 (i.e., the degree of congestion on a certain street, depicted as cross-hatched lines) associated with street images 42. When electronic device 1 is rotated to the leftward position relative to the user, input linking module 24 links additional or different input functionality to second graphical configuration 80. For instance, functions pertaining to second graphical configuration 80 are linked to second graphical configuration 80. In particular, the user accesses, manipulates, and/or edits navigation map 81 via, e.g., keypad 10 and/or a scroll wheel. The user may actuate keypad 10 and/or the scroll wheel to scroll up and down day navigation map 81 and zoom in and out of navigation map 81.

As illustrated in Fig. 12, a third graphical configuration 90 of map application 39 is displayed to the user on display device 8 when electronic device 1 is rotated to a rightward position. Third graphical configuration 90 provides additional data pertaining to map application 39, which is different from the data of first and second graphical configurations 70, 80. In the embodiment of Fig. 12, third graphical configuration 90 is, for example, a location map 91, providing a current location 92 of the user via location module 21.

Input linking module 24 determines that the rightward movement and orientation of electronic device 1 is within the scope of a change in orientation. Input linking module 24 also identifies that the rightward orientation of electronic device 1 is the display orientation which allows the user to view third graphical configuration 90 and accordingly links additional or new input functionality to third graphical configuration 90. More particularly, the user accesses, manipulates, and/or edits location map 91 via, e.g., keypad 10 and/or a scroll wheel. For example, the user may actuate keypad 10 and/or the scroll wheel to scroll up and down location map 91 and zoom in and out of location map 91.

Although the above embodiments discuss certain changes in movements and orientations of electronic device being leftward or rightward rotations and orientations, it should be appreciated that the present disclosure is not limited to those movements and orientations. For example, other movements, such as upward and downward titling, shaking, and any other motions and orientations of electronic device 1 may initiate input linking module 24 to link input functionality to specific graphical configurations.

The present disclosure may also extend to one or more of the following numbered clauses.
1. A mobile device, comprising:
   a display device configured to generate a first graphical configuration at a first orientation of the mobile device and a second graphical configuration at a second orientation of the mobile device;
   at least one input device; and
   an input linking module configured to selectively link the at least one input device to either the first or second graphical configuration based on an orientation of the mobile device.
2. The mobile device of clause 1, wherein the input liking module is configured to selectively link the at least one input device to either the first or second graphical configuration in response to changes in orientation of the mobile device.
3. The mobile device of claim 1, wherein the input linking module is configured to selectively link the at least one input device to the first graphical configuration when the mobile device is in the first orientation, and selectively link the at least one input device to the second graphical configuration when the mobile device is in the second orientation.
4. The mobile device of clause 1, wherein the input linking module is configured to selectively link a first input device to the first graphical configuration, and selectively link a second input device to the second graphical configuration, wherein the first input device is different than the second input device.
5. A system for managing graphical data, the system comprising:
   a display device for generating at least a first graphical configuration and a second graphical configuration, the display device including a display and a parallax barrier;
   a movement detection module configured to detect an orientation of the electronic device; and
   an input linking module configured to receive orientation data from the movement detection module and selectively link input functionality of the electronic device to either the first or second graphical configuration based on the orientation data.
6. The system of clause 5, wherein the parallax barrier is configured to block from view either the first or second graphical configuration based on the orientation of the electronic device.
7. The system of clause 6, wherein the input linking module is configured to link input functionality to either the first or second graphical configuration based on a change in orientation of the electronic device.
8. The system of clause 7, wherein linking input functionality to the first graphical configuration allows access and manipulation of only the first graphical configuration.
9. The system of clause 8, wherein linking input functionality to the second graphical configuration allows access and manipulation of only the second graphical configuration.
10. The system of clause 9, wherein the first graphical configuration is different from the second graphical configuration.
11. The system of clause 7, wherein the change in orientation includes a leftward or rightward rotation of the electronic device relative to a user.
12. A method for managing graphical data of an electronic device, comprising:
   selectively displaying either a first or second graphical configuration based on an orientation of the electronic device;
   monitoring movement of the electronic device;
   identifying a change in orientation of the electronic device; and
   selectively linking input functionality of the electronic device to either the first or second graphical configuration in response to the identified change in orientation.
13. The method of clause 12, further comprising manipulating only the first graphical configuration when input functionality is linked to the first graphical configuration, and manipulating only the second graphical configuration when input functionality is linked to the second graphical configuration.
14. The method of clause 12, further comprising selectively linking input functionality to either the first or second graphical configuration in response to a leftward rotation of the electronic device.
15. The method of clause 12, further comprising selectively linking input functionality to either the first or second graphical configuration in response to a rightward rotation of the electronic device.
16. The method of clause 12, wherein the first graphical configuration is different from the second graphical configuration.
17. A method for managing graphical data of an electronic device, comprising:
   selectively displaying a first graphical configuration based on a first orientation of the electronic device and a second graphical configuration based on a second orientation of the electronic device;
   monitoring an orientation of the electronic device; and
   linking input functionality of the electronic device to only the first graphical configuration when the electronic device is in the first orientation.
18. The method of clause 17, further comprising linking input functionality to only the second graphical configuration when the electronic device is in the second orientation.
19. The method of clause 18, further comprising manipulating either the first or second graphical configuration when input functionality is linked to either the first or second graphical configuration.
20. The method of clause 17, wherein the first graphical configuration is different from the second graphical configuration.
21. The mobile device of clause 1, wherein the input linking module is configured to be locked from selectively linking the at least one input device to either the first or second graphical configuration and unlocked to selectively link the at least one input device to either the first or second graphical configuration.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A mobile device, comprising:
a display device configured to generate a first graphical configuration at a first orientation of the mobile device and a second graphical configuration at a second orientation of the mobile device;
at least one input device; and
an input linking module configured to selectively link the at least one input device to either the first or second graphical configuration based on an orientation of the mobile device.

2. The mobile device of claim 1, wherein the input liking module is configured to selectively link the at least one input device to either the first or second graphical configuration in response to changes in orientation of the mobile device,
optionally wherein the change in orientation includes a leftward or rightward rotation of the electronic device relative to a user.

3. The mobile device of claim 1 or 2, wherein the input linking module is configured to selectively link the at least one input device to the first graphical configuration when the mobile device is in the first orientation, and selectively link the at least one input device to the second graphical configuration when the mobile device is in the second orientation.

4. The mobile device of any one of claims 1 to 3, wherein the input linking module is configured to selectively link a first input device to the first graphical configuration, and selectively link a second input device to the second graphical configuration, wherein the first input device is different than the second input device.

5. The mobile device of any one of claims 1 to 4, wherein the display device includes a parallax barrier configured to block from view either the first or second graphical configuration based on the orientation of the electronic device.

6. The mobile device of any one of claims 1 to 6, wherein linking the at least one input device to the first graphical configuration allows access and manipulation of only the first graphical configuration.

7. The mobile device of any one of claims 1 to 6, wherein linking the at least one input device to the second graphical configuration allows access and manipulation of only the second graphical configuration.

8. The mobile device of any one of claims 1 to 7, wherein the first graphical configuration is different from the second graphical configuration.

9. The mobile device of any one of claims 1 to 8, wherein the input linking module is configured to be locked from selectively linking the at least one input device to either the first or second graphical configuration and unlocked to selectively link the at least one input device to either the first or second graphical configuration.

10. A method for managing graphical data of an electronic device, comprising:
selectively displaying either a first or second graphical configuration based on an orientation of the electronic device;
monitoring movement of the electronic device;
identifying a change in orientation of the electronic device; and
selectively linking input functionality of the electronic device to either the first or second graphical configuration in response to the identified change in orientation.

11. The method of claim 10, further comprising manipulating only the first graphical configuration when input functionality is linked to the first graphical configuration, and manipulating only the second graphical configuration when input functionality is linked to the second graphical configuration.

12. The method of claim 10 or 11, further comprising selectively linking input functionality to either the first or second graphical configuration in response to a leftward rotation of the electronic device, or
selectively linking input functionality to either the first or second graphical configuration in response to a rightward rotation of the electronic device.

13. The method of any one of claims 10 to 12, wherein the first graphical configuration is different from the second graphical configuration.

14. The method of any one of claims 10 to 13, further comprising linking input functionality to only the second graphical configuration when the electronic device is in the second orientation.

15. The method of any one of claims 10 to 14, further comprising manipulating either the first or second graphical configuration when input functionality is linked to either the first or second graphical configuration.
